# EUROPEAN PATENT APPLICATION

(11) **EP 4 560 819 A1**
(43) Date of publication of application: **28.05.2025**
(21) Application number: 22964823.3
(22) Date of filing: 11.11.2022
(51) Int. Cl.: H01M 50/463, H01M 4/13

(54) **ELECTRODE ASSEMBLY AND PREPARATION METHOD THEREFOR, SECONDARY BATTERY, AND ELECTRIC DEVICE**

(71) Applicant: Contemporary Amperex Technology (Hong Kong) Limited, Central, Central And Western District (HK)
(72) Inventor: DENG, Yaqian, Ningde, Fujian 352100 (CN); CHEN, Ning, Ningde, Fujian 352100 (CN); SHI, Dongyang, Ningde, Fujian 352100 (CN); CHENG, Zhipeng, Ningde, Fujian 352100 (CN); WANG, Yuzhen, Ningde, Fujian 352100 (CN); JIN, Haizu, Ningde, Fujian 352100 (CN); LI, Baiqing, Ningde, Fujian 352100 (CN)
(74) Representative: Gong, Jinping
(86) International application number: PCT/CN2022/131251
(87) International publication number: WO 2024/098354

(57) **Abstract**

The present application provides an electrode assembly and a preparation method therefor, a secondary battery, and a power consuming device. A reserved space is formed between at least one surface of a separator and a corresponding electrode plate, and a spacing D of the reserved space tends to increase in a preset direction of the electrode plate from either edge of the separator to a middle of the separator, so that the reserved space is of a structure with a large middle and two small ends. In this way, during cycle of charging and discharging, when the electrode plate expands at a middle part more than at two edges thereof in its own width direction, the electrode plate is better accommodated in the reserved space. Therefore, even after expansion, the electrode plate can keep good contact with the separator, which prevents the middle part of the electrode plate from abutting against the separator due to a large expansion amount to result in an increase in a gap between the edge of the separator and the electrode plate, improves deintercalation dynamics at the edge of the electrode plate, and reduces the occurrence of lithium precipitation, thereby improving performance of the secondary battery.

## Description

### Technical Field

The present application relates to the technical field of batteries, and in particular, to an electrode assembly and a preparation method therefor, a secondary battery, and a power consuming device.

### Background Art

With the continuous expansion of the application field of secondary batteries, the market demand for the secondary batteries is expanding, and there are also increasing performance requirements for the secondary batteries. However, after the secondary battery is cyclically charged and discharged, an electrode plate in an electrode assembly, especially a negative electrode plate, generally expands, which leads to an increase in a gap between an edge of the electrode plate in its own width direction and a separator, worsens dynamics, and is prone to lithium precipitation, thereby affecting performance of the secondary battery.

### Summary of the Invention

In view of this, it is necessary to provide an electrode assembly and a preparation method therefor, a secondary battery, and a power consuming device, to reduce a gap at an edge of the electrode assembly during cycle of charging and discharging, improve dynamics, reduce the occurrence of lithium precipitation, and improve performance of the secondary battery.

In a first aspect, the present application provides an electrode assembly, comprising: a plurality of electrode plates that are sequentially stacked; a separator arranged between every two adjacent electrode plates, wherein between the two adjacent electrode plates, a reserved gap is formed between the separator and at least one of the electrode plates, and a spacing of the reserved gap is denoted as D; and in a preset direction of the electrode plate, the spacing D tends to increase from either edge of the separator to a middle of the separator, wherein when the electrode assembly is of a wound structure, the preset direction is a width direction of the electrode plate; or when the electrode assembly is of a stacked structure, the preset direction is the width direction or a length direction of the electrode plate.

In the above-mentioned electrode assembly, the reserved space is formed between at least one surface of the separator and the corresponding electrode plate, and the spacing D of the reserved space tends to increase in the preset direction of the electrode plate from either edge of the separator to the middle of the separator, so that the reserved space is of a structure with a large middle and two small ends. In this way, during cycle of charging and discharging, when the electrode plate expands at a middle part more than at two edges thereof in its own width direction, the electrode plate is better accommodated in the reserved space. Therefore, even after expansion, the electrode plate can keep good contact with the separator, which prevents the middle part of the electrode plate from abutting against the separator due to a large expansion amount to result in an increase in a gap between the edge of the separator and the electrode plate, improves deintercalation dynamics at the edge of the electrode plate, and reduces the occurrence of lithium precipitation, thereby improving performance of the secondary battery.

In some embodiments, a surface of the separator that faces the reserved gap is defined as a mating surface, and a middle area of the mating surface in the preset direction is recessed away from the corresponding electrode plate. In this way, the mating surface of the separator is designed to be recessed, so that an effective reserved gap is formed between the separator and the electrode plate, thereby reducing lithium precipitation. In addition, the edge of the electrode plate can be pressed by using the design of two thick ends, thereby preventing wrinkling of the electrode plate.

In some embodiments, in the preset direction, the mating surface comprises a first flat surface section and two first curved surface sections connected to two sides of the first flat surface section; and from one side of the first curved surface section close to the first flat surface section to the other side of the first curved surface section away from the first flat surface section, the first curved surface section is recessed in an arc shape toward the corresponding electrode plate. In this way, the mating surface is designed as the first flat surface section and the two first curved surface sections, so that the reserved gap with an arc-shaped recessed structure is formed between the mating surface and the electrode plate, thereby ensuring that the edge of the expanded electrode plate is in better contact with the separator, reducing fluffiness at an end of the electrode assembly, and improving deintercalation dynamics.

In some embodiments, a projection of the first curved surface section in a plane formed by a thickness direction of the electrode plate and the preset direction is a first contour line, and a coordinate system is constructed with an end of the first contour line close to the first flat surface section as an origin, a direction parallel to the preset direction as an X-axis, and a direction parallel to the thickness direction of the electrode plate as a Y-axis; and the first contour line satisfies the following functional relationship: F(X) = AX³ + BX² + CX, A = d0 × (4.5 + 13.5a - 13.5 × b) / M1³, B = d0 × (-4.5 - 22.5a - 18 × b) / M1², C = d0 × (1 + 9a + 31.5b) / M1, wherein F(x) is a value of the first contour line on the Y-axis, X is a value of the first contour line on the X-axis, d0 is a value of an end of the first contour line away from the first flat surface section on the Y-axis, M1 is a value of the end of the first contour line away from the first flat surface section on the X-axis, a and b are both correction coefficients, and 0 < a < b < 1. In this way, the curve relationship of the first curved surface section is satisfied as the functional expression of F(X), so that the edge of the expanded electrode plate can be in better contact with the separator, which reduces the gap at the edge, improves the deintercalation dynamics, and reduces the lithium precipitation, thereby improving the performance of the secondary battery.

In some embodiments, in the preset direction, the mating surface has an overall width denoted as L1, the first curved surface section has a width denoted as M1, and M1 and L1 satisfies the following condition: 1/6 < M1/L1 < 1/2. In this way, M1/L1 is designed between 1/6 and 1/2, which reasonably optimizes curvature of the first curved surface section, so that the edge of the separator can be in better contact with the edge of the expanded electrode plate, and the problem of lithium precipitation is effectively improved.

In some embodiments, the separator comprises a substrate and coatings arranged on two opposite side surfaces of the substrate, and the reserved gap is formed between at least one of the coatings and the corresponding electrode plate. In this way, the reserved gap is formed between the coating and the electrode plate, so that it is ensured that the edge of the separator can be in better contact with the expanded electrode plate, the gap therebetween is reduced, and the deintercalation dynamics is ensured.

In some embodiments, the coating has a thickness denoted as h1, and in the preset direction, the thickness h1 increases from a middle of the coating to either edge of the coating. In this way, the uneven thickness of the coating enable s the surface of the coating to be designed to be recessed, which facilitates compensation of the gap between the edge of the electrode plate and the separator.

In some embodiments, one of the two adjacent electrode plates is a negative electrode plate, and the reserved gap is formed between the separator and the negative electrode plate. In this way, the reserved gap is provided between the separator and the negative electrode plate, so that the gap between the edge of the expanded negative electrode plate and the separator is reduced, the dynamics is improved, and the problem of lithium precipitation is improved.

In some embodiments, a surface of the electrode plate that is configured to form the reserved gap is defined as an optimized surface, and a middle area of the optimized surface in the preset direction is recessed away from the corresponding separator. In this way, the optimized surface of the electrode plate is designed to be recessed, so that an effective reserved gap is formed between the separator and the electrode plate, thereby reducing lithium precipitation. In addition, the edge of the electrode plate can be pressed by using the design of two thick ends, thereby preventing wrinkling of the electrode plate.

In some embodiments, in the preset direction, the optimized surface comprises a second flat surface section and two second curved surface sections connected to two sides of the second flat surface section, and from one side of the second curved surface section close to the second flat surface section to the other side of the second curved surface section away from the second flat surface section, the second curved surface section is recessed in an arc shape away from the corresponding separator. In this way, the optimized surface is designed as the second flat surface section and the two second curved surface sections, so that the reserved gap with an arc-shaped recessed structure is formed between the optimized surface and the separator, thereby ensuring that the edge of the expanded electrode plate is in better contact with the separator, reducing fluffiness at an end of the electrode assembly, and improving deintercalation dynamics.

In some embodiments, a projection of the second curved surface section in the plane formed by the thickness direction of the electrode plate and the preset direction is a second contour line, and a coordinate system is constructed with an end of the second contour line close to the second flat surface section as an origin, a direction parallel to the preset direction as an X-axis, and a direction parallel to the thickness direction of the electrode plate as a Y-axis; and the second contour line satisfies the following functional relationship: F(X) = AX³ + BX² + CX, A = d0 × (4.5 + 13.5a - 13.5 × b) / M1³, B = d0 × (-4.5 - 22.5a - 18 × b) / M1², C = d0 × (1 + 9a + 31.5b) / M1, wherein F(x) is a value of the second contour line on the Y-axis, X is a value of the second contour line on the X-axis, d0 is a value of an end of the second contour line away from the second flat surface section on the Y-axis, M1 is a value of the end of the second contour line away from the second flat surface section on the X-axis, a and b are both correction coefficients, and 0 < a < b < 1. In this way, the curve relationship of the second curved surface section is satisfied as the functional expression of F(X), so that the edge of the expanded electrode plate can be in better contact with the separator, which reduces the gap at the edge, improves the deintercalation dynamics, and reduces the lithium precipitation, thereby improving the performance of the secondary battery.

In some embodiments, in the preset direction, the optimized surface has an overall width denoted as L2, the second curved surface section has a width denoted as M1, and M1 and L2 satisfy the following condition: 1/6 < M1/L2 < 1/2. In this way, M1/L2 is designed between 1/6 and 1/2, which reasonably optimizes curvature of the second curved surface section, so that the edge of the separator can be in better contact with the edge of the expanded electrode plate, and the problem of lithium precipitation is effectively improved.

In some embodiments, the electrode plate comprises a current collector and active layers arranged on two opposite side surfaces of the current collector, and the reserved gap is formed between at least one of the active layers and the corresponding separator. In this way, the reserved gap is formed between the active layer and the separator, so that it is ensured that the edge of the separator can be in better contact with the expanded electrode plate, the gap therebetween is reduced, and the deintercalation dynamics is ensured.

In some embodiments, the active layer has a thickness denoted as h2, and in the preset direction, the thickness h2 increases from a middle of the active layer to either edge of the active layer. In this way, the uneven thickness of the active layer enables the surface of the active layer to be designed to be recessed, which facilitates compensation of the gap between the edge of the electrode plate and the separator.

In a second aspect, the present application provides a secondary battery, comprising an electrode assembly of any one of the embodiments described above.

In a third aspect, the present application provides a power consuming device, comprising a secondary battery of the embodiment described above.

In a fourth aspect, the present application provides a method for preparing an electrode assembly, which is used to prepare an electrode assembly of any one of the embodiments described above, comprising the following steps: coating the active layers on the current collector by using a first die to obtain the electrode plate; coating the coatings on the substrate by using a second die to obtain the separator, wherein a middle part of a coating surface of the first die and/or the second die in a width direction of the coating surface protrudes in an arc shape; and stacking the electrode plate and the separator and performing a stacking or winding operation.

In some embodiments, in the width direction of the coating surface, the coating surface of the first die and/or the second die comprises a third flat surface section and two third curved surface sections connected to two sides of the third flat surface section, a projection of the third curved surface section in a plane perpendicular to a coating direction of the coating surface is a third contour line, and a coordinate system is constructed with an end of the third contour line close to the third flat surface section as an origin, a direction parallel to the width direction of the coating surface as an X-axis, and a direction perpendicular to the width direction of the coating surface as a Y-axis; and the third contour line satisfies the following functional relationship: F(X) = AX³ + BX² + CX, A = d0 × (4.5 + 13.5a - 13.5 × b) / M1³, B = d0 × (-4.5 - 22.5a - 18 × b) / M1², C = d0 × (1 + 9a + 31.5b) / M1, wherein F(x) is a value of the third contour line on the Y-axis, X is a value of the third contour line on the X-axis, d0 is a value of an end of the third contour line away from the third flat surface section on the Y-axis, M1 is a value of the end of the third contour line away from the third flat surface section on the X-axis, a and b are both correction coefficients, and 0 < a < b < 1.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become obvious to those of ordinary skill in the art upon reading the following detailed description of preferred implementations. Accompanying drawings are merely for the purpose of illustrating the preferred implementations and are not to be construed as limiting the present application. Moreover, like components are denoted by like reference signs throughout the accompanying drawings, in which:
FIG. 1 is a schematic structural diagram of a vehicle according to some embodiments of the present application;
FIG. 2 is an exploded schematic structural diagram of a secondary battery according to some embodiments of the present application;
FIG. 3 is a schematic structural diagram showing mating between an uneven separator and an electrode plate according to some embodiments of the present application;
FIG. 4 is a schematic diagram of the structure of FIG. 3 after expansion;
FIG. 5 is a schematic structural cross-sectional view of a coating of FIG. 3;
FIG. 6 is a schematic structural diagram showing mating between an uneven electrode plate and a separator according to some embodiments of the present application;
FIG. 7 is a schematic structural cross-sectional view of an active layer of FIG. 6;
FIG. 8 is a schematic flowchart showing preparation of an electrode assembly according to some embodiments of the present application;
FIG. 9 is a schematic diagram showing coating by using a first die or a second die according to some embodiments of the present application; and
FIG. 10 is a schematic structural cross-sectional view of a coating surface according to some embodiments of the present application.

1000. Vehicle; 100. Secondary battery; 110. Controller; 120. Motor; 10. Electrode assembly; 1. Electrode plate; 1a. Negative electrode plate; 11. Current collector; 12. Active layer; 13. Optimized surface; 131. Second flat surface section; 132. Second curved surface section; 13a. Second contour line; 2. Separator; 21. Substrate; 22. Coating; 23. Mating surface; 231. First flat surface section; 232. First curved surface section; 23a. First contour line; 3. Reserved gap; 20. End cap; 201. Electrode terminal; 30. Housing; 200. First die; 300. Second die; 400. Coating surface; 410. Third flat surface section; 420. Third curved surface section; 421. Third contour line; S. Preset direction; T. Thickness direction; N. Width direction of coating surface; H. Coating direction.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising/including" and "having" and any variations thereof in the description and the claims of the present application as well as the brief description of the drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, market demand for the traction batteries is also expanding.

The applicants have noticed that as ions are intercalated in or deintercalated from a positive electrode active material and a negative electrode active material during cycle of charging and discharging of a secondary battery, the secondary battery would swell due to a side reaction accumulation thickness, graphite flake peeling, etc. of a battery system, that is, a positive electrode plate and a negative electrode plate would expand outward. However, the positive electrode plate or the negative electrode plate has a larger expansion amount at a middle part than at an edge part thereof in a width direction, forming an arched bulge, which abuts against and presses a separator, resulting in an increase in a gap between an edge of the separator and an edge of the electrode plate.

If the gap between the edge of the separator and the edge of the electrode plate becomes larger, an electrolyte cannot effectively infiltrate the edge of the electrode plate, so that lithium ions cannot be effectively transferred at the edge of the electrode plate, which deteriorates deintercalation dynamics, and further leads to lithium precipitation at the edge of the electrode plate.

In view of this, in order to solve the problem that the dynamics at an edge of an electrode plate is deteriorated due to expansion of the electrode plate, which leads to the risk of lithium precipitation, the applicants have designed an electrode assembly after in-depth research. Between two adjacent electrode plates, a reserved gap is formed between a separator and at least one electrode plate. In addition, a spacing of the reserved gap is denoted as D; and in a preset direction of the electrode plate, the spacing D tends to increase from either edge of the separator to a middle of the separator.

In the above-mentioned electrode assembly, the reserved space is formed between at least one surface of the separator and the corresponding electrode plate, and the spacing D of the reserved space tends to increase in the preset direction of the electrode plate from either edge of the separator to the middle of the separator, so that the reserved space is of a structure with a large middle and two small ends. In this way, during cycle of charging and discharging, when the electrode plate expands at a middle part more than at two edges thereof in its own width direction, the electrode plate is better accommodated in the reserved space.

With such a design, even after expansion, the electrode plate can keep good contact with the separator, which prevents the middle part of the electrode plate from abutting against the separator due to a large expansion amount to result in an increase in a gap between the edge of the separator and the electrode plate, improves deintercalation dynamics at the edge of the electrode plate, and reduces the occurrence of lithium precipitation, thereby improving performance of the secondary battery.

The secondary battery disclosed in the embodiment of the present application may be used in, but not limited to, a power consuming device such as a vehicle, a ship or an aircraft. A power source system of the power consuming device may be composed of the secondary battery disclosed in the present application, etc.

An embodiment of the present application provides a power consuming device with a secondary battery as a power source. The power consuming device may be, but is not limited to, a mobile phone, a tablet, a notebook computer, an electric toy, an electric tool, an electromobile, an electric vehicle, a ship, a spacecraft, etc. The electric toy may include a stationary or mobile electric toy, such as a game console, an electric car toy, an electric ship toy, and an electric airplane toy. The spacecraft may include an airplane, a rocket, a space shuttle, a spaceship, etc.

For ease of description, an example in which a power consuming device according to an embodiment of the present application refers to a vehicle is used for description in the following embodiments.

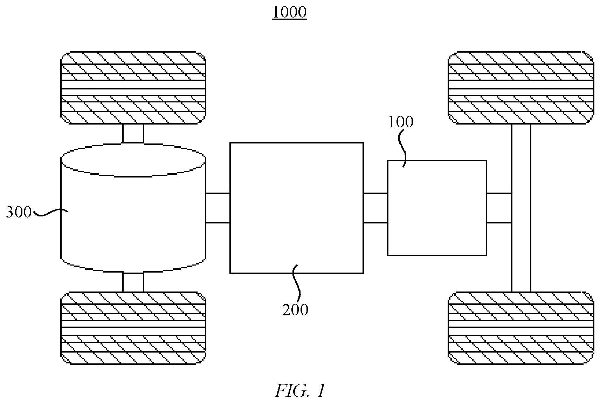

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, or an extended-range vehicle, etc. A secondary battery 100 is arranged inside the vehicle 1000, and the secondary battery 100 may be arranged at a bottom, a head or a tail of the vehicle 1000. The secondary battery 100 may be configured to supply power to the vehicle 1000. For example, the secondary battery 100 may be used as a power source for operating the vehicle 1000. The vehicle 1000 may further comprise a controller 110 and a motor 120. The controller 110 is configured to control the secondary battery 100 to supply power to the motor 120, for example, to meet working power requirements during starting, navigation and traveling of the vehicle 1000.

In some embodiments of the present application, the secondary battery 100 may not only serve as a power source for operating the vehicle 1000, but also serve as a power source for driving the vehicle 1000, instead of or partially instead of fuel or natural gas, to provide driving power for the vehicle 1000.

A plurality of secondary batteries 100 may be provided. The plurality of secondary batteries 100 may be in series connection or parallel connection or series-parallel connection. The series-parallel connection means that some of the plurality of secondary batteries 100 are in series connection and the rest are in parallel connection. The plurality of secondary batteries 100 may be directly connected to each other in series or in parallel or in series-parallel, and then the plurality of secondary batteries 100 as a whole are received in a case. Of course, the battery may also be received in the case as a whole that is formed by firstly connecting a plurality of secondary batteries 100 in series or in parallel or in series-parallel to form a battery module, and then connecting a plurality of battery modules in series or in parallel or in series-parallel. The battery may further comprise other structures. For example, the battery may further comprise a busbar component for realizing electrical connections between the plurality of secondary batteries 100.

Each secondary battery 100 may be a lithium-sulfur battery, a sodium-ion battery, or a magnesium-ion battery, but is not limited thereto. The secondary battery 100 may be in a form of a cylinder, a flat body, a cuboid, etc.

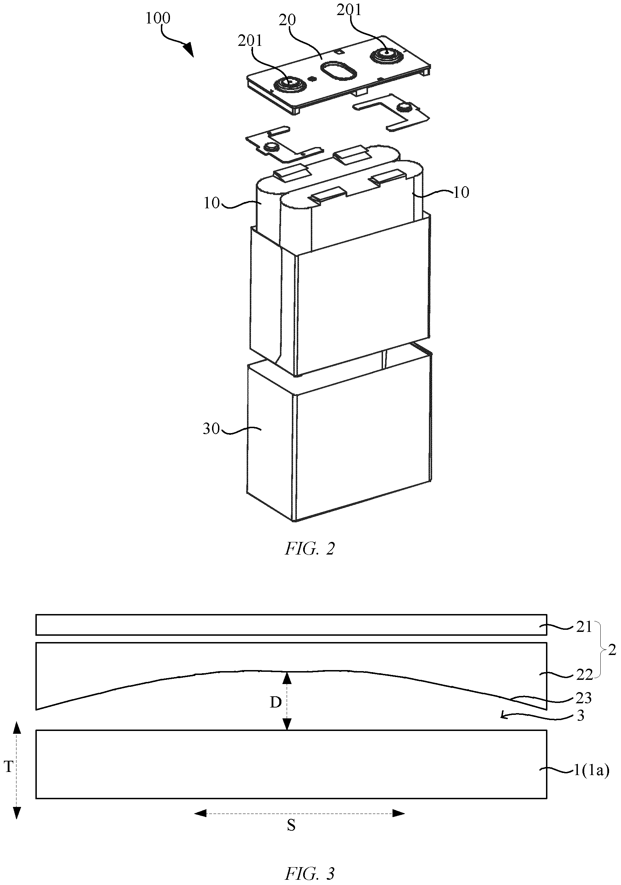

Referring to FIG. 2, FIG. 2 is an exploded schematic structural diagram of a secondary battery 100 according to some embodiments of the present application. The secondary battery 100 refers to a minimum unit of a battery. As shown in FIG. 2, the secondary battery 100 comprises an end cap 20, a housing 30, an electrode assembly 10, and other functional components.

The end cap 20 refers to a component that covers an opening of the housing 30 to isolate an internal environment of the secondary battery 100 from an external environment. Without limitation, the end cap 20 may be shaped to adapt to the shape of the housing 30 so as to fit with the housing 30. Optionally, the end cap 20 may be made of a material with certain hardness and strength (such as an aluminum alloy), and thus the end cap 20 is less prone to deformation when being pressed or collided, such that the secondary battery 100 can have a higher structural strength, and safety performance can also be improved. Functional components, such as an electrode terminal 201, may be provided on the end cap 20. The electrode terminal 201 may be used for electrical connection to the electrode assembly 10 so as to output or input electric energy of the secondary battery 100. In some embodiments, a pressure relief mechanism, which is configured to release an internal pressure when the internal pressure or temperature of the secondary battery 100 reaches a threshold, may be also provided on the end cap 20. The end cap 20 may be made of various materials, such as copper, iron, aluminum, stainless steel, an aluminum alloy, and plastic, which is not specifically limited in embodiments of the present application. In some embodiments, an insulating member may also be provided on an inner side of the end cap 20, and the insulating member may be configured to isolate electrically connected components in the housing 30 from the end cap 20 to reduce the risk of short circuit. Illustratively, the insulating member may be made of plastic, rubber, etc.

The housing 30 is an assembly that is configured to fit with the end cap 20 to form the internal environment of the secondary battery 100, wherein the internal environment formed may be used for accommodating the electrode assembly 10, an electrolyte and other components. The housing 30 and the end cap 20 may be separate components, and the housing 30 may be provided with an opening, at which the end cap 20 covers the opening to form the internal environment of the secondary battery 100. Without limitation, the end cap 20 and the housing 30 may also be integrated with each other. Specifically, the end cap 20 and the housing 30 may form a common connection face before other components are inserted into the housing. When the interior of the housing 30 needs to be packaged, the end cap 20 then covers the housing 30. The housing 30 may have various shapes and various sizes, for example, in the form of a cuboid, a cylinder, a hexagonal prism, etc. Specifically, the shape of the housing 30 may be determined depending on the specific shape and size of the electrode assembly 10. The housing 30 may be made of various materials, such as copper, iron, aluminum, stainless steel, an aluminum alloy, and plastic, which is not particularly limited in embodiments of the present application.

The electrode assembly 10 is a component in the secondary battery 100 where an electrochemical reaction occurs. The housing 30 may comprise one or more electrode assemblies 10 therein. The electrode assembly 10 is mainly formed by winding or stacking a positive electrode plate and a negative electrode plate 1a, and a separator 2 is generally arranged between the positive electrode plate and the negative electrode plate 1a. Portions of the positive electrode plate and the negative electrode plate 1a having active materials constitute a main body portion of the electrode assembly 10, and portions of the positive electrode plate and the negative electrode plate 1a having no active material each constitute a tab. A positive electrode tab and a negative electrode tab may be both located at one end of the main body portion or respectively at two ends of the main body portion. During the charging and discharging of the battery, a positive electrode active material and a negative electrode active material react with the electrolyte, and the tabs are connected to the electrode terminals 201 to form a current loop.

According to some embodiments of the present application, referring to FIG. 3, the present application provides an electrode assembly 10. The electrode assembly 10 comprises: a plurality of electrode plates 1 and a separator 2. The plurality of electrode plates 1 are sequentially stacked, and the separator 2 is arranged between every two adjacent electrode plates 1. Between the two adjacent electrode plates 1, a reserved gap 3 is formed between the separator 2 and at least one of the electrode plates 1, and a spacing of the reserved gap 3 is denoted as D. In a preset direction S of the electrode plate 1, the spacing D tends to increase from either edge of the separator 2 to a middle of the separator 2, wherein when the electrode assembly 10 is of a wound structure, the preset direction S is a width direction of the electrode plate 1; or when the electrode assembly 10 is of a stacked structure, the preset direction S is the width direction or a length direction of the electrode plate 1.

The electrode plates 1 may comprise the positive electrode plate and the negative electrode plate 1a. In preparation of the electrode assembly 10, there may be two or more electrode plates 1. For example, when the electrode assembly 10 is prepared in a wound manner, a long negative electrode plate 1a and a long positive electrode plate may be sequentially stacked; or when the electrode assembly 10 is prepared in a stacked manner, a plurality of electrode plates 1 may be sequentially stacked. The two adjacent electrode plates 1 generally have opposite polarities, that is, one of the electrode plates 1 is a positive electrode plate, and the other electrode plate is a negative electrode plate 1a. Of course, in the winding process, the negative electrode plate 1a may be wound by 1-2 more turns as an outermost ring, which means that there are also two adjacent electrode plates 1 that are both negative electrode plates 1a at the outermost ring.

The preset direction S should be understood as the width direction or length direction of the electrode plate 1. When the electrode assembly 10 is of a wound structure, two edges of the electrode plate 1 and the separator 2 in the length direction of the electrode plate 1 are respectively wound as an innermost ring and an outermost ring, so that relatively large gaps between each electrode plate 1 and the separator 2 occur at two edges in the width direction of the electrode plate 1 during cycle of charging and discharging. In this case, the width direction of the electrode plate 1 is considered as the preset direction S. When the electrode assembly 10 is of a stacked structure, a relatively large gap occurs at any edge during cycle of charging and discharging, and thus the width direction or length direction of the electrode plate 1 may be considered as the preset direction S. Of course, when the electrode assembly 10 is of a stacked structure, the spacing of the reserved gap 3 may increase from any edge to the middle in the length direction and width direction of the electrode plate 1.

For ease of understanding, the length direction of the electrode plate 1 may be understood as a coating direction of the electrode plate 1, and the width direction of the electrode plate 1 is a direction perpendicular to the coating direction of the electrode plate 1.

In some embodiments, regardless of whether the electrode assembly 10 is of a wound structure or a stacked structure, the preset direction S is the width direction of the electrode plate 1, so that during preparation of the electrode plate 1 or the separator 2, an uneven electrode plate 1 or separator 2 may be continuously processed only by designing a coating surface 400 of a die to have an uneven thickness in its own width direction, thereby facilitating preparation.

The middle of the separator 2 refers to a geometric central part of the separator 2 in the preset direction S, and "tending to increase" means increasing gradually; or increasing first and then remaining unchanged; or increasing first, then remaining unchanged, and then increasing, etc.

The reserved gap 3 refers to a space between the separator 2 and the electrode plate 1 for the electrode plate 1 to expand outward. In this way, the contact between the separator 2 and the edge of the electrode plate 1 (such as an overhang area of the negative electrode plate 1a) can be increased, thereby reducing fluffiness at an end of the electrode assembly 10, and improving dynamics. In addition, designing the reserved gap 3 between the electrode plate 1 and the separator 2 facilitates reduction of a macro expansion force on the electrode assembly 10.

There are many ways to form the reserved gap 3, such as designing a surface of the separator 2 to be recessed; or designing a surface of the electrode plate 1 to be recessed; or recessing both the surface of the separator 2 and the surface of the electrode plate 1.

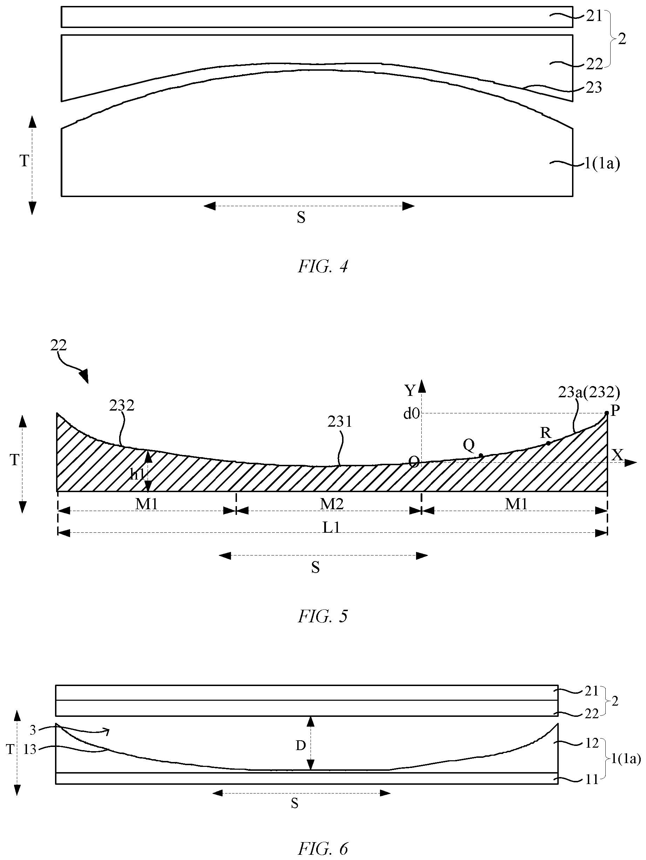

During cycle of charging and discharging, when the electrode plate 1 expands at a middle part more than two edges thereof in its own width direction, the electrode plate is better accommodated in the reserved space, referring to FIG. 4. In this way, even after expansion, the electrode plate 1 can keep good contact with the separator 2, which prevents the middle part of the electrode plate 1 from abutting against the separator 2 due to a large expansion amount to result in an increase in a gap between the edge of the separator 2 and the electrode plate 1, improves deintercalation dynamics at the edge of the electrode plate 1, and reduces the occurrence of lithium precipitation, thereby improving performance of the secondary battery 100.

According to some embodiments of the present application, optionally, referring to FIG. 3, a surface of the separator 2 that faces the reserved gap 3 is defined as a mating surface 23. A middle area of the mating surface 23 in the preset direction S is recessed away from the corresponding electrode plate 1.

The corresponding electrode plate 1 refers to an electrode plate 1 corresponding to the mating surface 23, and the reserved gap 3 is formed between the mating surface 23 and the electrode plate 1.

The middle area of the mating surface 23 in the preset direction S is designed to be recessed, so that an edge of the mating surface 23 in the preset direction S is higher than the middle of the mating surface 23, thereby forming the reserved gap 3 between the separator 2 and the electrode plate 1. In addition, the thickening design of the edge of the separator 2 can press the edge of the electrode plate 1, thereby preventing wrinkling of the electrode plate 1. In addition, the width of the middle area in the preset direction S may not be specifically limited in this embodiment, provided that the width is greater than 0 and less than the overall width of the mating surface 23 in the preset direction S.

There are two ways to recess the mating surface 23 in the preset direction S, such as designing a coating 22 on the separator 2 as a structure with two thick edges and a thin middle; or designing a substrate 21 of the separator 2 as a structure with two thick edges and a thin middle.

The mating surface 23 of the separator 2 is designed to be recessed, so that an effective reserved gap 3 is formed between the separator 2 and the electrode plate 1, thereby reducing lithium precipitation. In addition, the edge of the electrode plate 1 can be pressed by using the design of two thick ends, thereby preventing wrinkling of the electrode plate 1.

According to some embodiments of the present application, optionally, referring to FIG. 5, in the preset direction S, the mating surface 23 comprises a first flat surface section 231 and two first curved surface sections 232 connected to two sides of the first flat surface section 231. From one side of the first curved surface section 232 close to the first flat surface section 231 to the other side of the first curved surface section 232 away from the first flat surface section 231, the first curved surface section 232 is recessed in an arc shape toward the corresponding electrode plate 1.

The mating surface 23 is divided into three parts in the preset direction S: a middle part being a flat surface, and two lateral parts being curved surfaces, which enables the formed reserved gap 3 to be of a structure with a large middle and two small ends.

The first curved surface section 232 means recessing from one side close to the first flat surface section 231 to the other side away from the first flat surface section 231 and drawing close to the corresponding electrode plate 1, and the first curved surface section 232 thus formed is of an arc-shaped curved surface structure.

The mating surface 23 is designed as the first flat surface section 231 and the two first curved surface sections 232, so that the reserved gap 3 with an arc-shaped recessed structure is formed between the mating surface 23 and the electrode plate 1, thereby ensuring that the edge of the expanded electrode plate 1 is in better contact with the separator 2, reducing fluffiness at an end of the electrode assembly 10, and improving deintercalation dynamics.

According to some embodiments of the present application, optionally, referring to FIG. 5, a projection of the first curved surface section 232 in a plane formed by a thickness direction T of the electrode plate 1 and the preset direction S is a first contour line 23a. A coordinate system is constructed with an end of the first contour line 23a close to the first flat surface section 231 as an origin, a direction parallel to the preset direction S as an X-axis, and a direction parallel to the thickness direction T of the electrode plate 1 as a Y-axis. The first contour line 23a satisfies the following functional relationship: F(X) = AX³ + BX² + CX, A = d0 × (4.5 + 13.5a - 13.5 × b) / M1³, B = d0 × (-4.5 - 22.5a - 18 × b) / M1², C = d0 × (1 + 9a + 31.5b) / M1, wherein F(x) is a value of the first contour line 23a on the Y-axis, X is a value of the first contour line 23a on the X-axis, d0 is a value of an end of the first contour line 23a away from the first flat surface section 231 on the Y-axis, M1 is a value of the end of the first contour line 23a away from the first flat surface section 231 on the X-axis, a and b are both correction coefficients, and 0 < a < b < 1.

The first contour line 23a is the projection of the first curved surface section 232 in the plane formed by the thickness direction T of the electrode plate 1 and the preset direction S. The first contour line 23a is a curve, and conforms to a univariate cubic functional relation in the constructed coordinate system.

To clarify the functional expression of F(X) = AX³ + BX² + CX, referring to FIG. 5, four coordinate points are taken on the first contour line 23a: O(0,0), Q(1/3M1,a*d0), R(2/3M1,b*d0), and P(M1,d0), and the four coordinate points are substituted into the functional expression of F(X), and are solved simultaneously with each other to obtain expressions of A, B, and C. d0 may be understood as a height difference between the side of the first curved surface section 232 away from the first flat surface section 231 and the first flat surface section 231, and M1 is understood as a width of the first curved surface section 232 in the preset direction S. Of course, when reversing is performed on a competing product, the functional expression of F(X) is determined by measuring the values of d0 and M1 of the separator 2 in the competing product. Next, any point on the first curved surface section 232 in the competing product is taken to determine whether the expression of F(X) in the present application is satisfied.

There are a plurality of values of correction coefficients, a and b, in the functional expression, which only need to satisfy: the relation of 0 < a < b < 1, for example: a satisfies the following conditions: 0 < a < 1/2, and 1/2 < b < 1; or 0 < a ≤ 1/3, and 2/3 ≤ b < 1, etc.

The curve relationship of the first curved surface section 232 is satisfied as the functional expression of F(X), so that the edge of the expanded electrode plate 1 can be in better contact with the separator 2, which reduces the gap at the edge (such as the overhang area of the electrode plate 1), improves the deintercalation dynamics, and reduces the lithium precipitation, thereby improving the performance of the secondary battery 100.

According to some embodiments of the present application, optionally, referring to FIG. 5, in the preset direction S, the mating surface 23 has an overall width denoted as L1, the first curved surface section 232 has a width denoted as M1, and M1 and L1 satisfy the following condition: 1/6 < M1/L1 < 1/2.

L1 of the mating surface 23 is composed of three parts, i.e., L1 = M2 + 2M1, wherein M2 is a value of a width of the first flat surface section 231 in the preset direction S.

M1/L1 is designed between 1/6 and 1/2, which reasonably optimizes curvature of the first curved surface section 232, so that the edge of the separator 2 can be in better contact with the edge of the expanded electrode plate 1, and the problem of lithium precipitation is effectively improved.

According to some embodiments of the present application, optionally, referring to FIG. 3, the separator 2 comprises a substrate 21 and coatings 22 arranged on two opposite side surfaces of the substrate 21, and the reserved gap 3 is formed between at least one of the coatings 22 and the corresponding electrode plate 1.

The separator 2 refers to a structure arranged between the positive electrode plate and the negative electrode plate 1a, which serves to allow lithium ions to freely pass between the positive electrode plate and the negative electrode plate 1a. The substrate 21 refers to a porous structure that allows lithium ions to freely pass through, which is made of a material on which there are multiple choices. For example, the substrate may be, but is not limited to, single-layer polyethylene, single-layer polypropylene, double-layer polyethylene, double-layer polypropylene, multi-layer polyethylene, multi-layer polypropylene, or a stack of polyethylene and polypropylene, etc.

The coating 22 refers to a slurry structure coated on the substrate 21, and the slurry may comprise a binder, a thickener, a plating (such as Al₂O₃) of the separator 2, an insulating coating 22, a stabilizer, etc. The binder may be, but is not limited to, at least one of polyvinylidene fluoride, vinylidene fluoride-hexafluoropropylene, polyvinyl alcohol, polytetrafluoroethylene, sodium carboxymethyl cellulose, polymerized styrene butadiene rubber, fluorinated rubber, LA133, LA132, styrene-butadiene rubber, polyacrylate, and polyvinylidene fluoride.

A reserved gap 3 is provided between only one coating 22 on the separator 2 and the electrode plate 1; or a reserved gap 3 is provided between each of two coatings 22 on the separator 2 and the electrode plate 1. When a reserved gap 3 is provided between only one coating 22 on the separator 2 and the electrode plate 1, the electrode plate 1 may be a negative electrode plate 1a.

The reserved gap 3 is formed between the coating 22 and the electrode plate 1, so that it is ensured that the edge of the separator 2 can be in better contact with the expanded electrode plate 1, the gap therebetween is reduced, and the deintercalation dynamics is ensured.

According to some embodiments of the present application, optionally, referring to FIG. 5, the coating 22 has a thickness denoted as h1, and in the preset direction S, the thickness h1 increases from a middle of the coating 22 to either edge of the coating 22.

The middle of the coating 22 refers to a geometric central part of the coating 22 in the preset direction S. The thickness h1 increasing from the middle of the coating 22 to either edge of the coating 22 means that the surface of the coating 22 is of a recessed structure.

The uneven thickness of the coating 22 enables the surface of the coating 22 to be designed to be recessed, which facilitates compensation of the gap between the edge of the electrode plate 1 and the separator 2.

According to some embodiments of the present application, optionally, referring to FIG. 6, one of the two adjacent electrode plates 1 is a negative electrode plate 1a, and the reserved gap 3 is formed between the separator 2 and the negative electrode plate 1a.

During cycle, the negative electrode plate 1a is prone to expansion, resulting in a larger expansion amount in the middle of the negative electrode plate 1a than in the edge of the negative electrode plate 1a, and a larger gap between the edge of the electrode plate 1 and the separator 2.

The reserved gap 3 is provided between the separator 2 and the negative electrode plate 1a, so that the gap between the edge of the expanded negative electrode plate 1a and the separator 2 is reduced, the dynamics is improved, and the problem of lithium precipitation is improved.

According to some embodiments of the present application, optionally, referring to FIG. 6, a surface of the electrode plate 1 that is configured to form the reserved gap 3 is defined as an optimized surface 13. A middle area of the optimized surface 13 in the preset direction S is recessed away from the corresponding separator 2.

The middle area of the optimized surface 13 in the preset direction S is designed to be recessed, so that an edge of the optimized surface 13 in the preset direction S is higher than the middle of the optimized surface 13, thereby forming the reserved gap 3 between the separator 2 and the electrode plate 1. In addition, the thickening design of the edge of the optimized surface 13 enables the edge of the optimized surface 13 to be in contact with the separator 2, thereby preventing wrinkling of the electrode plate 1. In addition, the width of the middle area in the preset direction S may not be specifically limited in this embodiment, provided that the width is greater than 0 and less than the overall width of the mating surface 23 in the preset direction S.

There are two ways to recess the optimized surface 13 in the preset direction S, such as designing an active layer 12 on the electrode plate 1 as a structure with two thick edges and a thin middle; or designing a current collector 11 of the electrode plate 1 as a structure with two thick edges and a thin middle.

The optimized surface 13 of the electrode plate 1 is designed to be recessed, so that an effective reserved gap 3 is formed between the separator 2 and the electrode plate 1, thereby reducing lithium precipitation. In addition, the edge of the electrode plate 1 can be pressed by using the design of two thick ends, thereby preventing wrinkling of the electrode plate 1.

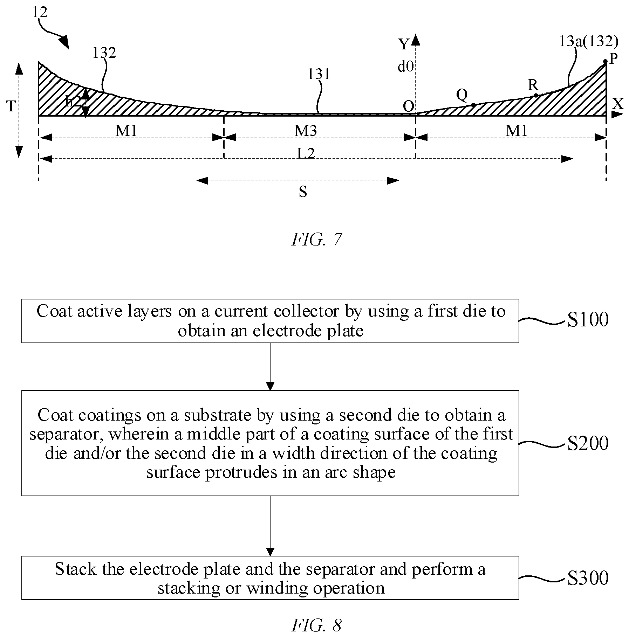

According to some embodiments of the present application, optionally, referring to FIG. 7, in the preset direction S, the optimized surface 13 comprises a second flat surface section 131 and two second curved surface sections 132 connected to two sides of the second flat surface section 131. From one side of the second curved surface section 132 close to the second flat surface section 131 to the other side of the second curved surface section 132 away from the second flat surface section 131, the second curved surface section 132 is recessed in an arc shape away from the corresponding separator 2.

The optimized surface 13 is divided into three parts in the preset direction S: a middle part being a flat surface, and two lateral parts being curved surfaces, which enables the formed reserved gap 3 to be of a structure with a large middle and two small ends.

The second curved surface section 132 means recessing from one side close to the second flat surface section 131 to the other side away from the second flat surface section 131 and drawing close to the corresponding separator 2, and the second curved surface section 132 thus formed is of an arc-shaped curved surface structure.

The optimized surface 13 is designed as the second flat surface section 131 and the two second curved surface sections 132, so that the reserved gap 3 with an arc-shaped recessed structure is formed between the optimized surface 13 and the separator 2, thereby ensuring that the edge of the expanded electrode plate 1 is in better contact with the separator 2, reducing fluffiness at an end of the electrode assembly 10, and improving deintercalation dynamics.

According to some embodiments of the present application, optionally, referring to FIG. 7, a projection of the second curved surface section 132 in a plane formed by a thickness direction T of the electrode plate 1 and the preset direction S is a second contour line 13a. A coordinate system is constructed with an end of the second contour line 13a close to the second flat surface section 131 as an origin, a direction parallel to the preset direction S as an X-axis, and a direction parallel to the thickness direction T of the electrode plate 1 as a Y-axis. The second contour line 13a satisfies the following functional relationship: F(X) = AX³ + BX² + CX, A = d0 × (4.5 + 13.5a - 13.5 × b) / M1³, B = d0 × (-4.5 - 22.5a - 18 × b) / M1², C = d0 × (1 + 9a + 31.5b) / M1, wherein F(x) is a value of the second contour line 13a on the Y-axis, X is a value of the second contour line 13a on the X-axis, d0 is a value of an end of the second contour line 13a away from the second flat surface section 131 on the Y-axis, M1 is a value of the end of the second contour line 13a away from the second flat surface section 131 on the X-axis, a and b are both correction coefficients, and 0 < a < b < 1.

The second contour line 13a is the projection of the second curved surface section 132 in the plane formed by the thickness direction T of the electrode plate 1 and the preset direction S. The second contour line 13a is a curve, and also conforms to a univariate cubic functional relation in the constructed coordinate system.

To clarify the functional expression of F(X) = AX³ + BX² + CX, four coordinate points are taken on the second contour line 13a: O(0,0), Q(1/3M1,a*d0), R(2/3M1,b*d0), and P(M1,d0), and the four coordinate points are substituted into the functional expression of F(X), and are solved simultaneously with each other to obtain expressions of A, B, and C. d0 may be understood as a height difference between the side of the second curved surface section 132 away from the second flat surface section 131 and the second flat surface section 131, and M1 is understood as a width of the second curved surface section 132 in the preset direction S. Of course, when reversing is performed on a competing product, the functional expression of F(X) is determined by measuring the values of d0 and M1 of the electrode plate 1 in the competing product. Next, any point on the second curved surface section 132 in the competing product is taken to determine whether the expression of F(X) in the present application is satisfied.

There are a plurality of values of correction coefficients, a and b, in the functional expression, which only need to satisfy: the relation of 0 < a < b < 1, for example: a satisfies the following conditions: 0 < a < 1/2, and 1/2 < b < 1; or 0 < a ≤ 1/3, and 2/3 ≤ b < 1, etc.

The curve relationship of the second curved surface section 132 is satisfied as the functional expression of F(X), so that the edge of the expanded electrode plate 1 can be in better contact with the separator 2, which reduces the gap at the edge (such as the overhang area of the electrode plate 1), improves the deintercalation dynamics, and reduces the lithium precipitation, thereby improving the performance of the secondary battery 100.

According to some embodiments of the present application, optionally, referring to FIG. 7, in the preset direction S, the optimized surface 13 has an overall width denoted as L2, the second curved surface section 132 has a width denoted as M1, and M1 and L2 satisfy the following condition: 1/6 < M1/L2 < 1/2.

L2 of the optimized surface 13 is composed of three parts, i.e., L2 = M3 + 2M1, wherein M3 is a value of a width of the second flat surface section 131 in the preset direction S.

M1/L2 is designed between 1/6 and 1/2, which reasonably optimizes curvature of the second curved surface section 132, so that the edge of the separator 2 can be in better contact with the edge of the expanded electrode plate 1, and the problem of lithium precipitation is effectively improved.

According to some embodiments of the present application, optionally, referring to FIG. 6, the electrode plate 1 comprises a current collector 11 and active layers 12 arranged on two opposite side surfaces of the current collector 11, and the reserved gap 3 is formed between at least one of the active layers 12 and the corresponding separator 2.

The current collector 11 refers to a component that can not only bear an active material, but can also collect and output a current generated by an electrode active material. A material of the current collector 11 is differently selected based on different polarities of the electrode plates 1. For example, in the positive electrode plate, the material of the current collector 11 may be, but is not limited to, a metallic material such as aluminum and nickel, or may be a composite material such as a conductive resin, a titanium-nickel shape memory alloy, and carbon-coated aluminum foil. In the positive electrode plate, the material of the current collector 11 may be, but is not limited to, a metallic material such as copper, or certainly, may be a composite material such as a conductive resin and a titanium-nickel shape memory alloy.

The active layer 12 refers to an active material coated on the current collector 11, and a material of the active layer may be selected based on the polarity of the electrode plate 1. For example, in the positive electrode plate, the material of an active material layer may be, but is not limited to, lithium cobaltate, lithium manganate, lithium nickelate, lithium iron phosphate, a ternary material, etc. In the negative electrode plate 1a, the material of the active material layer may be, but is not limited to, graphite, a silicon oxide, etc.

The reserved gap 3 is formed between the active layer 12 and the separator 2, so that it is ensured that the edge of the separator 2 can be in better contact with the expanded electrode plate 1, the gap therebetween is reduced, and the deintercalation dynamics is ensured.

According to some embodiments of the present application, optionally, referring to FIG. 7, the active layer 12 has a thickness denoted as h2, and in the preset direction S, the thickness h2 increases from a middle of the active layer 12 to either edge of the active layer 12.

The middle of the active layer 12 refers to a geometric central part of the active layer 12 in the preset direction S. The thickness h2 increasing from the middle of the active layer 12 to either edge of the active layer 12 means that the surface of the active layer 12 is of a recessed structure.

The uneven thickness of the active layer 12 enables the surface of the active layer 12 to be designed to be recessed, which facilitates compensation of the gap between the edge of the electrode plate 1 and the separator 2.

According to some embodiments of the present application, the present application provides a secondary battery 100, comprising an electrode assembly 10 in any one of the above solutions.

According to some embodiments of the present application, the present application provides a power consuming device, comprising a secondary battery 100 in the above solution.

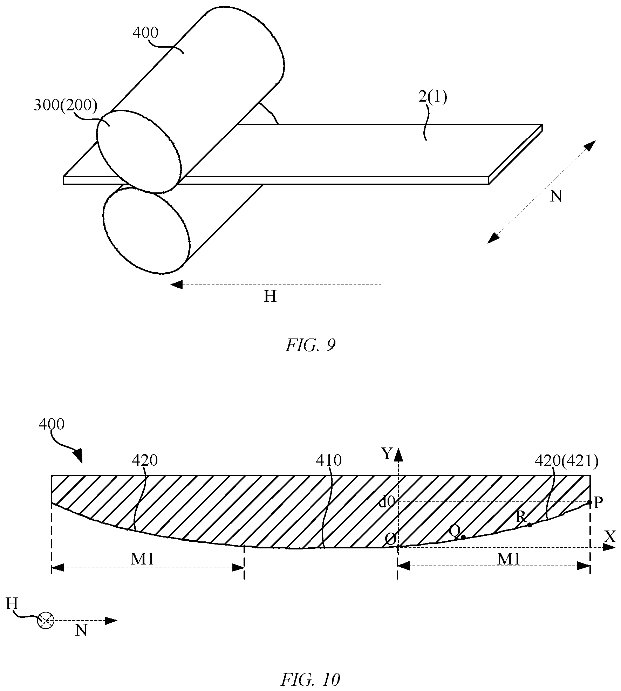

According to some embodiments of the present application, referring to FIGS. 8 and 9, the present application provides a method for preparing an electrode assembly 10, which is used to prepare an electrode assembly 10 in any one of the above solutions, comprising the following steps.

In step S100, the active layers 12 are coated on the current collector 11 by using a first die 200 to obtain the electrode plate 1.

In step S200, the coatings 22 are coated on the substrate 21 by using a second die 300 to obtain the separator 2, wherein a middle part of a coating surface 400 of the first die 200 and/or the second die 300 in a width direction N of the coating surface protrudes in an arc shape.

In step S300, the electrode plate 1 and the separator 2 are stacked and a stacking or winding operation is performed.

In step S100 and step S200, the coating surface 400 of at least one of the first die 200 and the second die 300 is designed to have an arc-shaped protrusion structure at the middle part thereof, so that the surface of the electrode plate 1 or the separator 2 forms an arc-shaped recessed surface structure during coating of the electrode plate 1 or the separator 2. In addition, each of the first die 200 and the second die 300 may be designed as a roller structure, that is, their respective coating surfaces 400 are cylindrical curved surfaces.

In addition, the execution order of step S100 and step S200 may not be limited, for example, step S100 may be performed before step S200; or step S200 may be performed before step S100; or step S100 and step S200 are performed simultaneously.

In step S300, the stacking operation means that a plurality of electrode plates 1 and separators 2 are alternately stacked in sequence. In addition, the winding operation means that the positive electrode plate, the separator 2 and the negative electrode plate 1a are arranged and stacked, and the stacked structure is wound in the length direction of the electrode plate 1 to form a flat wound structure.

At least one of the coating surfaces 400 of the first die 200 and the second die 300 is designed as an arc-shaped protruding surface, so that the surface of the separator 2 or the electrode plate 1 forms an arc-shaped recessed structure, ensuring that the reserved gap 3 is provided between the separator 2 and the electrode plate 1, and reducing the lithium precipitation and wrinkling of the electrode plate 1.

According to some embodiments of the present application, optionally, referring to FIG. 10, in the width direction N of the coating surface, the coating surface 400 of the first die 200 and/or the second die 300 comprises a third flat surface section 410 and two third curved surface sections 420 connected to two sides of the third flat surface section 410, a projection of the third curved surface section 420 in a plane perpendicular to a coating direction H of the coating surface 400 is a third contour line 421, and a coordinate system is constructed with an end of the third contour line 421 close to the third flat surface section 410 as an origin, a direction parallel to the width direction N of the coating surface as an X-axis, and a direction perpendicular to the width direction N of the coating surface as a Y-axis; and the third contour line 421 satisfies the following functional relationship: F(X) = AX³ + BX² + CX, A = d0 × (4.5 + 13.5a - 13.5 × b) / M1³, B = d0 × (-4.5 - 22.5a - 18 × b) / M1², C = d0 × (1 + 9a + 31.5b) / M1, wherein F(x) is a value of the third contour line 421 on the Y-axis, X is a value of the third contour line 421 on the X-axis, d0 is a value of an end of the third contour line 421 away from the third flat surface section 410 on the Y-axis, M1 is a value of the end of the third contour line 421 away from the third flat surface section 410 on the X-axis, a and b are both correction coefficients, and 0 < a < b < 1.

The coating surface 400 of the first die 200 and/or the second die 300 is designed into three parts: a middle part being a flat surface, and two lateral parts being curved surfaces, which enables the formed reserved gap 3 to be of a structure with a large middle and two small ends.

In addition, the third contour line 421 of the third curved surface section 420 is designed as a curve, that is, the third contour line conforms to a univariate cubic functional relation in the constructed coordinate system.

The coating direction H refers to a direction of relative linear movement of the coating surface 400 relative to the electrode plate 1 or the separator 2 during coating. For example, when the electrode plate 1 or the separator 2 is conveyed forward under the action of a conveying roller, the coating surface 400 has a direction of backward linear movement relative to the electrode plate 1 or the separator 2. Of course, the coating direction H may also be directly understood as the length direction of the electrode plate 1 or the separator 2. It should be noted that the coating direction H may be referred to as an inward direction perpendicular to the paper in FIG. 10.

The curve relationship of the third curved surface section 420 is satisfied as the functional expression of F(X), so that the edge of the expanded electrode plate 1 can be in better contact with the separator 2, which reduces the gap at the edge (such as the overhang area of the electrode plate 1), improves the deintercalation dynamics, and reduces the lithium precipitation, thereby improving the performance of the secondary battery 100.

According to some embodiments of the present application, referring to FIGS. 3 to 10, the present application provides a negative electrode plate 1a and a separator 2. The coating 22 of the separator 2 is designed to have an uneven thickness in its own width direction, i.e., a curved surface with a thin middle and two thick ends; and/or the active layer 12 of the negative electrode plate 1a is designed to have an uneven thickness in its own width direction, i.e., a curved surface with a thin middle and two thick ends. In addition, the thickness of the coating surface 400 of at least one of the first die 200 and the second die 300 may be designed to have a curved surface with a thick middle and two thin ends. Each curved surface satisfies a univariate cubic functional expression in the constructed coordinate system.

To make the objectives, technical solutions and advantages of the present application simpler and more understandable, the present application is illustrated by using the following specific embodiments, but the present application is by no means limited to these embodiments. The embodiments described below are only better embodiments of the present application, and can be used to describe the present application, but should not be construed as limiting the scope of the present application. It should be noted that any modifications, equivalent substitutions, improvements, and the like made within the spirit and principle of the present application should fall within the scope of protection of the present application.

To better describe the present application, the content of the present application will be further described below with reference to embodiments. The following specific embodiments all take a negative electrode plate 1a with a width of 100 millimeters (mm) and a thickness of 150 microns (µm) as an example.

### Comparative example 1

### Positive electrode plate

A positive electrode active material of nickel-cobalt-manganese ternary material (NCM811), a conductive agent of acetylene black and a binder of polyvinylidene fluoride (PVDF) were uniformly mixed in a mass ratio of 97 : 2 : 1 and then added to a solvent of NMP to prepare a positive electrode slurry; and the positive electrode slurry was uniformly coated onto a positive electrode current collector 11 of aluminum foil, dried at 85°C and then cold pressed, followed by die cutting and slitting to prepare a positive electrode plate of a lithium-ion battery.

### Negative electrode plate 1a

A negative electrode active material of graphite, a conductive agent of acetylene black, a thickener of sodium hydroxymethylcellulose (CMC) and a binder of styrene-butadiene rubber (SBR) were added into a solvent of water in a mass ratio of 96 : 2 : 1 : 1 and uniformly mixed to prepare a negative electrode slurry; and the negative electrode slurry was uniformly coated onto a negative electrode current collector 11 of copper foil, dried at 85°C and then cold pressed to prepare a negative electrode plate 1a of the lithium-ion battery.

### Separator 2

A polyethylene microporous film was used as a substrate 21 of a porous separator 2, and inorganic aluminum trioxide powder, polyvinyl pyrrolidone and an acetone solvent were uniformly mixed in a weight ratio of 3 : 1.5 : 5.5 to prepare a slurry, which was then coated onto one side of the substrate 21 and dried to obtain the separator 2. A surface of the separator 2 was provided with no mating surface 23, that is, the surface of the separator 2 was a flat surface, wherein d0 = 0 mm.

### Electrolyte

Lithium hexafluorophosphate was dissolved in a mixed solvent of ethylene carbonate, dimethyl carbonate and methyl ethyl carbonate (the volume ratio of ethylene carbonate, dimethyl carbonate and methyl ethyl carbonate was 1 : 2 : 1) to obtain an electrolyte of the lithium-ion battery.

### Secondary battery 100

The positive electrode plate, the negative electrode plate 1a and the separator 2 as described above were wound to obtain an electrode assembly 10, followed by procedures such as packaging, electrolyte filling, formation and degassing to prepare a secondary battery 100.

### Embodiment 1

This embodiment was substantially the same as comparative example 1 in structure, except that a surface of the separator 2 was designed as a mating surface 23. The first curved surface section 232 had M1 of 30 mm and d0 of 0.08 mm, and both points Q and R on the first curved surface section 232 were on a curve corresponding to the function of F(X) described above, wherein a and b **in** the function of F(X) were 1/4 and 1/2, respectively, A = 3.33 × 10⁻⁶, B = -0.0017, and C = 0.051. In this case, Q had a coordinate position of (10 mm, 0.02 mm), and R had a coordinate position of (20 mm, 0.04 mm).

### Embodiment 2

This embodiment was substantially the same as Embodiment 1 **in** structure, except that the point R was above the curve corresponding to the function of F(X) described above, that is, R had a coordinate position of (20 mm, 0.06 mm).

### Embodiment 3

This embodiment was substantially the same as Embodiment 1 **in** structure, except that the point R was below the curve corresponding to the function of F(X) described above, that is, R had a coordinate position of (20 mm, 0.02 mm).

The secondary batteries 100 of the above embodiments and comparative example were respectively cycled for 200 cls at a rate of 0.5 C/1 C, and it was observed whether there were purple spots and lithium precipitation **in** the range of 20 mm at overhang (the part of the negative electrode plate 1a beyond positive electrode plates **in** its own width direction) between the negative electrode plate 1a and a previous positive electrode plate and a next positive electrode plate. For specific parameters, reference may be made to Table 1.

**Table 1**

| Separator 2 | d0 | M1 | Q-coordinate | R-coordinate | Observed result |
|---|---|---|---|---|---|
| Comparative example 1 | 0 mm | 30 mm | (10 mm, 0 mm) | (20 mm, 0 mm) | Purple spots and lithium precipitation in the range of 20 mm at overhang |
| Embodiment 1 | 0.08 mm | 30 mm | (10 mm, 0.02 mm) | (20 mm, 0.04 mm) | Purple spots and no lithium precipitation in the range of 4 mm at overhang |
| Embodiment 2 | 0.08 mm | 30 mm | (10 mm, 0.02 mm) | (20 mm, 0.06 mm) | Purple spots and lithium precipitation in the range of 20 mm at verhang |
| Embodiment 3 | 0.08 mm | 30 mm | (10 mm, 0.02 mm) | (20 mm, 0.02 mm) | Purple spots and lithium precipitation in the range of 20 mm at verhang |

As can be seen from the data in Table 1, the comparison between comparative example 1 and Embodiments 1 to 3 shows that: designing a surface of the separator 2 to be recessed can shorten the range of purple spots at the overhang; in addition, the problem of lithium precipitation at the overhang is also improved.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. An electrode assembly (10), comprising:
a plurality of electrode plates (1) that are sequentially stacked;
a separator (2) arranged between every two adjacent electrode plates (1), wherein
between the two adjacent electrode plates (1), a reserved gap (3) is formed between the separator (2) and at least one of the electrode plates (1), and a spacing of the reserved gap (3) is denoted as D; and in a preset direction (S) of the electrode plate (1), the spacing D tends to increase from either edge of the separator (2) to a middle of the separator (2), wherein when the electrode assembly (10) is of a wound structure, the preset direction (S) is a width direction of the electrode plate (1); or when the electrode assembly (10) is of a stacked structure, the preset direction (S) is the width direction or a length direction of the electrode plate (1).

2. The electrode assembly (10) according to claim 1, wherein a surface of the separator (2) that faces the reserved gap (3) is defined as a mating surface (23), and a middle area of the mating surface (23) in the preset direction (S) is recessed away from the corresponding electrode plate (1).

3. The electrode assembly (10) according to claim 2, wherein in the preset direction (S), the mating surface (23) comprises a first flat surface section (231) and two first curved surface sections (232) connected to two sides of the first flat surface section (231); and from one side of the first curved surface section (232) close to the first flat surface section (231) to the other side of the first curved surface section (232) away from the first flat surface section (231), the first curved surface section (232) is recessed in an arc shape toward the corresponding electrode plate (1).

4. The electrode assembly (10) according to claim 3, wherein a projection of the first curved surface section (232) in a plane formed by a thickness direction (T) of the electrode plate (1) and the preset direction (S) is a first contour line (23a), and a coordinate system is constructed with an end of the first contour line (23a) close to the first flat surface section (231) as an origin, a direction parallel to the preset direction (S) as an X-axis, and a direction parallel to the thickness direction (T) of the electrode plate (1) as a Y-axis; and
the first contour line (23a) satisfies the following functional relationship: F(X) = AX³ + BX² + CX, A = d0 × (4.5 + 13.5a - 13.5 × b) / M1³, B = d0 × (-4.5 - 22.5a - 18 × b) / M1², C = d0 × (1 + 9a + 31.5b) / M1, wherein F(x) is a value of the first contour line (23a) on the Y-axis, X is a value of the first contour line (23a) on the X-axis, d0 is a value of an end of the first contour line (23a) away from the first flat surface section (231) on the Y-axis, M1 is a value of the end of the first contour line (23a) away from the first flat surface section (231) on the X-axis, a and b are both correction coefficients, and 0 < a < b < 1.

5. The electrode assembly (10) according to claim 3, wherein in the preset direction (S), the mating surface (23) has an overall width denoted as L1, the first curved surface section (232) has a width denoted as M1, and M1 and L1 satisfy the following condition: 1/6 < M1/L1 < 1/2.

6. The electrode assembly (10) according to any one of claims 1 to 5, wherein the separator (2) comprises a substrate (21) and coatings (22) arranged on two opposite side surfaces of the substrate (21), and the reserved gap (3) is formed between at least one of the coatings (22) and the corresponding electrode plate (1).

7. The electrode assembly (10) according to claim 6, wherein the coating (22) has a thickness denoted as h1, and in the preset direction (S), the thickness h1 increases from a middle of the coating (22) to either edge of the coating (22).

8. The electrode assembly (10) according to any one of claims 1 to 7, wherein one of the two adjacent electrode plates (1) is a negative electrode plate (1a), and the reserved gap (3) is formed between the separator (2) and the negative electrode plate (1a).

9. The electrode assembly (10) according to any one of claims 1 to 8, wherein a surface of the electrode plate (1) that is configured to form the reserved gap (3) is defined as an optimized surface (13), and a middle area of the optimized surface (13) in the preset direction (S) is recessed away from the corresponding separator (2).

10. The electrode assembly (10) according to claim 9, wherein in the preset direction (S), the optimized surface (13) comprises a second flat surface section (131) and two second curved surface sections (132) connected to two sides of the second flat surface section (131), and from one side of the second curved surface section (132) close to the second flat surface section (131) to the other side of the second curved surface section (132) away from the second flat surface section (131), the second curved surface section (132) is recessed in an arc shape away from the corresponding separator (2).

11. The electrode assembly (10) according to claim 10, wherein a projection of the second curved surface section (132) in the plane formed by the thickness direction (T) of the electrode plate (1) and the preset direction (S) is a second contour line (13a), and a coordinate system is constructed with an end of the second contour line (13a) close to the second flat surface section (131) as an origin, a direction parallel to the preset direction (S) as an X-axis, and a direction parallel to the thickness direction (T) of the electrode plate (1) as a Y-axis; and
the second contour line (13a) satisfies the following functional relationship: F(X) = AX³ + BX² + CX, A = d0 × (4.5 + 13.5a - 13.5 × b) / M1³, B = d0 × (-4.5 - 22.5a - 18 × b) / M1², C = d0 × (1 + 9a + 31.5b) / M1, wherein F(x) is a value of the second contour line (13a) on the Y-axis, X is a value of the second contour line (13a) on the X-axis, d0 is a value of an end of the second contour line (13a) away from the second flat surface section (131) on the Y-axis, M1 is a value of the end of the second contour line (13a) away from the second flat surface section (131) on the X-axis, a and b are both correction coefficients, and 0 < a < b < 1.

12. The electrode assembly (10) according to claim 10, wherein in the preset direction (S), the optimized surface (13) has an overall width denoted as L2, the second curved surface section (132) has a width denoted as M1, and M1 and L2 satisfy the following condition: 1/6 < M1/L2 < 1/2.

13. The electrode assembly (10) according to any one of claims 1 to 12, wherein the electrode plate (1) comprises a current collector (11) and active layers (12) arranged on two opposite side surfaces of the current collector (11), and the reserved gap (3) is formed between at least one of the active layers (12) and the corresponding separator (2).

14. The electrode assembly (10) according to claim 13, wherein the active layer (12) has a thickness denoted as h2, and in the preset direction (S), the thickness h2 increases from a middle of the active layer (12) to either edge of the active layer (12).

15. A secondary battery (100), comprising an electrode assembly (10) according to any one of claims 1 to 14.

16. A power consuming device, comprising a secondary battery (100) according to claim 15.

17. A method for preparing an electrode assembly (10), which is used to prepare an electrode assembly (10) according to any one of claims 1 to 14, comprising the following steps:
coating the active layers (12) on the current collector (11) by using a first die (200) to obtain the electrode plate (1);
coating the coatings (22) on the substrate (21) by using a second die (300) to obtain the separator (2), wherein a middle part of a coating surface (400) of the first die (200) and/or the second die (300) in a width direction (N) of the coating surface protrudes in an arc shape; and
stacking the electrode plate (1) and the separator (2) and performing a stacking or winding operation.

18. The method for preparing an electrode assembly (10) according to claim 17, wherein in the width direction (N) of the coating surface, the coating surface (400) of the first die (200) and/or the second die (300) comprises a third flat surface section (410) and two third curved surface sections (420) connected to two sides of the third flat surface section (410), a projection of the third curved surface section (420) in a plane perpendicular to a coating direction (H) of the coating surface (400) is a third contour line (421), and a coordinate system is constructed with an end of the third contour line (421) close to the third flat surface section (410) as an origin, a direction parallel to the width direction (N) of the coating surface as an X-axis, and a direction perpendicular to the width direction (N) of the coating surface as a Y-axis; and
the third contour line (421) satisfies the following functional relationship: F(X) = AX³ + BX² + CX, A = d0 × (4.5 + 13.5a - 13.5 × b) / M1³, B = d0 × (-4.5 - 22.5a - 18 × b) / M1², C = d0 × (1 + 9a + 31.5b) / M1, wherein F(x) is a value of the third contour line (421) on the Y-axis, X is a value of the third contour line (421) on the X-axis, d0 is a value of an end of the third contour line (421) away from the third flat surface section (410) on the Y-axis, M1 is a value of the end of the third contour line (421) away from the third flat surface section (410) on the X-axis, a and b are both correction coefficients, and 0 < a < b < 1.
